# EUROPÄISCHE PATENTSCHRIFT

(11) **EP 2 160 344 B1**
(45) Veröffentlichungstag und Bekanntmachung des Hinweises auf die Patenterteilung: **14.09.2011**
(21) Anmeldenummer: 07725825.9
(22) Anmeldetag: 04.06.2007
(51) Int. Cl.: B65G 53/22, B65G 53/18, B65G 53/16

(54) **VERTEILVORRICHTUNG FÜR EIN FLUIDISIERBARES FÖRDERGUT**
DISTRIBUTION APPARATUS FOR FLUIDIZABLE MATERIAL TO BE CONVEYED
DISPOSITIF DE DISTRIBUTION POUR PRODUIT FLUIDISABLE À TRANSPORTER

(43) Veröffentlichungstag der Anmeldung: 10.03.2010
(73) Patentinhaber: Claudius Peters Projects GmbH, 21614 Buxtehude (DE)
(72) Erfinder: ALTMANN-RINCK, Michael, 21614 Buxtehude (DE); HILGRAF, Peter, 22149 Hamburg (DE); WOLF, Andreas, 21406 Melbeck (DE)
(74) Vertreter: Glawe, Delfs, Moll
(86) Internationale Anmeldenummer: PCT/EP2007/004957
(87) Internationale Veröffentlichungsnummer: WO 2008/148406

(56) Entgegenhaltungen:
- WO-A-02/074670
- US-B1- 6 764 253

## Beschreibung

Die Erfindung betrifft eine Verteilvorrichtung zum Verteilen eines fluidisierbaren Förderguts von einem Ausgangsbehälter auf eine Mehrzahl von Zielbehältern. Die Verteilvorrichtung umfasst ein Förderrohr mit einer Zutrittsöffnung für das Fördergut und einer Mehrzahl von Austrittsöffnungen für das Fördergut. In dem Förderrohr sind Durchtrittsflächen angeordnet, durch die ein Fluidisiergasstrom von unten in das Förderrohr eingeleitet wird.

Verteilvorrichtungen dieser Art können beispielsweise bei der Produktion von Aluminium zum Einsatz kommen. Die für die Aluminiumproduktion erforderliche Tonerde muss aus einem zentralen Vorratsbehälter den einzelnen Elektrolysezellen zugeführt werden. Je nach Größe der Produktionsanlage ist das System zur Zuführung der Tonerde in mehrere Ebenen unterteilt, wobei die Zielbehälter der höheren Ebenen jeweils die Ausgangsbehälter der nachfolgenden Ebene bilden. Das erfindungsgemäße Verteilvorrichtung ist insbesondere geeignet für die letzte Ebene, auf der die Tonerde von einem Zwischenbehälter auf die Vorlagebehälter der Elektrolysezellen verteilt wird.

Bekannt ist ein Verteilvorrichtung dieser Art, bei dem das fluidisierte Fördergut sich unter dem Einfluss der Schwerkraft entlang dem Förderrohr bewegt, WO 02/074670 A1. Ein Nachteil dieser Verteilvorrichtung besteht darin, dass das Förderrohr über seine gesamte Länge ein stetiges Gefälle aufweisen muss. In vielen Fällen gibt es aber räumliche Vorgaben für den Verlauf des Förderrohrs, die es erschweren, die Forderung nach einem stetigen Gefälle einzuhalten. Dies gilt insbesondere, wenn bestehende Anlagen nachträglich mit einer neuen Verteilvorrichtung ausgerüstet werden sollen.

Bekannt sind ferner sogenannte pneumatische Verteilvorrichtungen. Bei diesen Verteilvorrichtungen wird ein Treibgasstrom durch das Förderrohr geleitet, der so schnell ist, dass das Fördergut in dem Förderrohr vom Gasstrom aufgenommen und mitgeführt wird. Damit das Fördergut vom Treibgasstrom mitgeführt wird, muss die Treibgasgeschwindigkeiten bei mindestens 6 m/s bis 7 m/s liegen. Eine solche Verteilvorrichtung kann zwar vielseitig eingesetzt werden und es ist möglich, das Fördergut entgegen der Schwerkraft zu transportieren, jedoch ist der Energieverbrauch sehr hoch.

Der Erfindung liegt die Erfindung zugrunde, eine Verteilvorrichtung der eingangs genannten Art vorzustellen, die einen geringen Energieverbrauch hat und die vielseitig einsetzbar ist. Die Aufgabe wird gelöst durch die Merkmale des Anspruchs 1. Danach umfasst die Verteilvorrichtung eine Treibgaszuführung zum Erzeugen eines Treibgasstroms entlang der Förderrichtung des Förderrohrs. Die durch die Treibgaszuführung zugeführte Treibgasmenge ist so bemessen, dass der Treibgasstrom durch das Förderrohr eine Geschwindigkeit zwischen 0,5 m/s und 1,5 m/s hat. Vorteilhafte Ausführungsformen finden sich in den Unteransprüchen.

Zunächst werden einige Begriffe erläutert. Unter Fluidisieren wird ein Vorgang verstanden, durch den ein in granularer Form vorliegendes Material in einen Zustand versetzt wird, in dem es sich ähnlich wie eine Flüssigkeit verhält. Im Ausgangszustand liegen die Partikel des granularen Materials unter dem Einfluss der Schwerkraft aufeinander. Die Reibung zwischen den Partikeln ist so groß, dass eine erhebliche Kraft erforderlich ist, um sie relativ zueinander zu bewegen. Zum Fluidisieren wird ein Gasstrom von unten durch das granulare Material geleitet, so dass der Gasstrom dem Einfluss der Schwerkraft auf die Partikel entgegenwirkt. Bei einem passend gewählten Fluidisiergasstrom wird die Reibung zwischen den Partikeln so gering, dass das granulare Material die Eigenschaften einer Flüssigkeit annimmt. Das granulare Material hat also beispielsweise die Eigenschaft, entlang eines Gefälles zu fließen.

Als fluidisierbar wird jedes Material bezeichnet, das durch einen geeigneten Fluidisiergasstrom in diesen Zustand versetzt werden kann.

Die in dem Förderrohr angeordneten Durchtrittsflächen haben die Aufgabe, den Fluidisiergasstrom so in das Fördergut einzuleiten, dass das Fördergut den fluidisierten Zustand einnimmt. Die Durchtrittsflächen sind also unterhalb des Förderguts angeordnet, so dass der Fluidisiergasstrom großflächig auf das Fördergut einwirken kann.

Das Fördergut kann von einem Ausgangsbehälter auf eine große Anzahl von Zielbehältern verteilt werden. Möglich sind Anlagen, bei denen einem Ausgangsbehälter mehrere hundert Zielbehälter zugeordnet sind. Die Zielbehälter ihrerseits können wiederum Ausgangsbehälter für eine nachgeordnete Verteilvorrichtung sein. Auf diese Weise können mehrere Ebenen von Verteilvorrichtungen hierarchisch hintereinander angeordnet sein.

Erfindungsgemäß ist eine Treibgaszuführung vorgesehen, die dazu ausgelegt ist, einen Treibgasstrom entlang der Förderrichtung des Förderrohrs zu erzeugen. Die Treibgaszuführung ist vorzugsweise am Anfang des Förderrohrs, also vor der Zutrittsöffnung, angeordnet. Der erzeugte Treibgasstrom ist so groß, dass das fluidisierte Fördergut sich in Förderrichtung durch das Förderrohr bewegt. Am Ende des Förderrohrs, also in Förderrichtung hinter der letzten Austrittsöffnung, kann eine Ablufteinrichtung angeordnet sein, durch die der Treibgasstrom abgeführt wird.

Wenn der Treibgasstrom in das fluidisierte Fördergut eintritt, vermischt sich der Treibgasstrom mit dem Fluidisiergasstrom. Der Fluidisiergasstrom wird in Förderrichtung umgelenkt, so dass der Treibgasstrom zusammen mit dem Fluidisiergasstrom als kombinierter Gasstrom den Transport des Förderguts entlang dem Förderrohr unterstützen.

Indem das fluidisierte Fördergut von dem Treibgasstrom bzw. dem kombinierten Gasstrom in Förderrichtung bewegt wird, ist die erfindungsgemäße Verteilvorrichtung unabhängig von der Schwerkraft. Die Förderstrecke kann also freier gewählt werden. Der Treibgasstrom muss lediglich so bemessen sein, dass das einer geringen inneren Reibung unterliegende fluidisierte Fördergut gefördert wird. Obwohl dem Förderrohr außer dem Treibgasstrom auch ein Fluidisiergasstrom zugeführt wird, ist der Gasverbrauch wesentlich geringer als bei einer rein pneumatischen Verteilvorrichtung.

Da die Verteilvorrichtung unabhängig von der Schwerkraft ist, kann das Fördergut auch dann transportiert werden, wenn sich nur wenig Fördergut im Förderrohr befindet. Es ist also möglich, Reste von Fördergut aus dem Förderrohr herauszutransportieren. Der Treibgasstrom kann dazu genutzt werden, das Förderrohr zu reinigen. Erfindungsgemäß ist dies besonders auch bei horizontaler und ansteigender Anordnung des Förderrohrs möglich.

Da der Treibgasstrom und der kombinierte Gasstrom entlang dem Förderrohr gezwungen werden, ist es möglich, das Förderrohr mit engem Radius umzulenken, ohne dass der Transport dadurch gestoppt wird. Ein alleine unter dem Einfluss der Schwerkraft bewegtes Fördergut stockt an Umlenkungen dieser Art. Die erfindungsgemäße Verteilvorrichtung ermöglicht also eine freiere Gestaltung des Förderwegs.

Es hat sich gezeigt, dass ein Transport des Förderguts entlang dem Förderrohr auch dann möglich ist, wenn die Durchtrittsflächen sich nicht über die gesamte Länge des Förderrohrs erstrecken. Durch das Zusammenwirken des Fluidisiergasstroms mit dem Treibgasstrom wird der Transport vielmehr auch dann aufrechterhalten, wenn das Förderrohr Abschnitte aufweist, in denen kein Fluidisiergas zugeführt wird. Im Rahmen der Erfindung ist es deswegen möglich, die Austrittsöffnungen im Boden des Förderrohrs anzuordnen. Vorzugsweise sind die Austrittsöffnungen in den Abschnitten des Förderrohrs angeordnet, in denen keine Durchtrittsflächen angeordnet sind. Es hat sich gezeigt, dass der kombinierte Gasstrom aus Fluidisiergas und Fördergas das Fördergut so transportiert, dass ein Teil des Förderguts durch die Austrittsöffnung'nach unten fällt, während ein Teil des Förderguts über die Austrittsöffnung hinweg entlang dem Förderrohr transportiert wird. Dass bei jeder Austrittsöffnung ein Teil des Förderguts nach unten fällt, während ein Teil entlang dem Förderrohr weitertransportiert wird, führt dazu, dass die Zielbehälter sich unterschiedlich schnell mit Fördergut füllen. Die am Anfang des Förderrohr angeordneten Zielbehälter sind früher gefüllt als die am Ende des Förderrohrs angeordneten Zielbehälter. Dem kann entgegengewirkt werden, beispielsweise indem die Austrittsöffnungen unterschiedliche Querschnitte haben oder in dem die Austrittsöffnungen mit Ventilen versehen werden. In der Regel wird die unterschiedliche Füllgeschwindigkeit der Zielbehälter aber in Kauf genommen. Wenn der erste Zielbehälter vollständig gefüllt ist, kann kein Fördergut mehr in diesen Zielbehälter fallen und das gesamte Fördergut wird über diese Austrittsöffnung hinweg entlang dem Förderrohr transportiert. Die Verteilvorrichtung wird so lange betrieben, bis der letzte Zielbehälter gefüllt ist und dann angehalten. Um den Zeitpunkt zum Anhalten der Verteilvorrichtung festzustellen, kann ein Füllstandssensor zum Anzeigen des Füllzustands des letzten Zielbehälters vorgesehen sein. Ebenfalls möglich ist es, in allen Zielbehältern Füllstandssensoren anzuordnen.

Dass ein Teil des Förderguts durch die Austrittsöffnungen fällt, während ein Teil über die Austrittsöffnung hinweg transportiert wird, gilt selbst dann, wenn sich die Austrittsöffnung über die gesamte Breite oder nahezu die gesamte Breite des Förderrohrs erstreckt. Die Austrittsöffnung kann also einen gleich großen oder nahezu gleich großen Querschnitt haben wie das Förderrohr. Als vorteilhaft wird es angesehen, wenn die Querschnittsfläche der Austrittsöffnung um nicht mehr als 20%, vorzugsweise um nicht mehr als 10%, weiter vorzugsweise um nicht mehr als 5% kleiner ist als die Querschnittsfläche des Förderrohrs.

Da der Transportmechanismus von der Schwerkraft unabhängig ist, kann das Förderrohr so ausgebildet sein, dass es einen Abschnitt aufweist, der in Förderrichtung ansteigt. Der Anstieg kann gegenüber der Horizontalen um 10°, vorzugsweise um 20°, weiter vorzugsweise um 30° geneigt sein.

Die erfindungsgemäße Verteilvorrichtung kann so beschaffen sein, dass sie die Zielbehälter, in denen das durch die die Austrittsöffnungen austretende Fördergut gesammelt wird, umfasst. Weist das Förderrohr einen Anstieg auf, so kann ein in Förderrichtung weiter hinten liegender zweiter Zielbehälter höher angeordnet sein als ein weiter vorne liegender erster Zielbehälter. Zwischen dem ersten und dem zweiten Zielbehälter wird das Fördergut entgegen der Schwerkraft gefördert. Wenn die Zielbehälter unterhalb der Austrittsöffnungen angeordnet sind, sammelt sich das Fördergut allein unter dem Einfluss der Schwerkraft in den Zielbehältern.

Für einen wirksamen Transport des Förderguts muss sichergestellt sein, dass der Treibgasstrom bzw. der kombinierte Gasstrom sich entlang der durch das Förderrohr vorgegebenen Strecke bewegen. Der Gasstrom soll nicht unterwegs aus dem Förderrohr austreten können. Die Zielbehälter sind deswegen vorzugsweise dicht mit dem Förderrohr verbunden, so dass ein Austreten des Gasstroms durch die Zielbehälter nicht möglich ist.

Ferner kann auch der Ausgangsbehälter als Bestandteil der Verteilvorrichtung angesehen werden. Der Ausgangsbehälter ist vorzugsweise oberhalb der Zutrittsöffnung des Förderrohrs angeordnet, so dass das Fördergut sich allein unter dem Einfluss der Schwerkraft in das Förderrohr bewegen kann. Möglich ist es, dass am Übergang von dem Ausgangsbehälter zu der Zutrittsöffnung eine Schleuse vorgesehen ist. Die Schleuse kann zum einen dafür sorgen, dass der Gasstrom nicht aus durch die Zutrittsöffnung und den Ausgangsbehälter aus dem Förderrohr entweichen kann. Zum anderen kann die Schleuse sicherstellen, dass nur abgemessene Mengen an Fördergut in das Förderrohr eintreten können.

Erforderlich ist eine solche Schleuse jedoch nicht, vielmehr ist es im Rahmen der Erfindung möglich, dass der Übergang vom Ausgangsbehälter durch die Zutrittsöffnung in das Förderrohr frei durchgängig für das Fördergut ist. Es tritt dann soviel Fördergut aus dem Ausgangsbehälter in das Förderrohr ein, dass das Förderrohr im Bereich unter der Zutrittsöffnung mit dem Fördergut gefüllt ist. Durch den Fluidisiergasstrom wird das Fördergut fluidisiert und durch den Treibgasstrom aus dem Bereich unter der Zutrittsöffnung weggeführt. Eine frei durchgängige Öffnung ist vorteilhaft, weil das Förderrohr dann frei von mechanisch bewegten Bauteilen ist.

Durch eine frei durchgängige Öffnung kann grundsätzlich auch ein Gasstrom entweichen. Ein Widerstand wird dem Gasstrom jedoch dadurch entgegengesetzt, dass er das vor der Zutrittsöffnung angeordnete Fördergut durchdringen muss. Dieser Widerstand ist desto größer, je länger der Weg durch das Fördergut ist und desto kleiner die Fläche ist, über die sich der Gasstrom innerhalb des Förderguts verteilen kann. Vorzugsweise ist vor der Zutrittsöffnung so viel Fördergut angeordnet, dass die Zutrittsöffnung abgedichtet ist. Von einer in diesem Sinne hinreichenden Abdichtung wird gesprochen, wenn nur ein geringer Teil von weniger als 10 % des Gasstroms im Förderrohr durch die Zutrittsöffnung entweichen kann.

Der Ausgangsbehälter kann in unmittelbarer Nachbarschaft der Zutrittsöffnung angeordnet sein. Zur Abdichtung des Gasstroms dient dann das Fördergut im Ausgangsbehälter. Vorteilhaft ist es, wenn zwischen dem Ausgangsbehälter und der Zutrittsöffnung ein Verbindungsrohr angeordnet ist, das mit Fördergut gefüllt ist. Das Verbindungsrohr hat eine kleinere Querschnittsfläche als der Ausgangsbehälter, so dass sich dem Gasstrom ein erhöhter Widerstand entgegensetzt. Das Verbindungsrohr kann dieselbe Querschnittsfläche haben wie das Förderrohr. Für eine wirksame Abdichtung hat das Verbindungsrohr eine Länge zwischen 0,8 m und 3 m, vorzugsweise zwischen 1,3 m und 2 m.

Ein Transport des Förderguts entlang dem Förderrohr findet nur dann statt, wenn zwischen dem Anfang des Förderrohrs und dem Ende des Förderrohrs ein Druckunterschied besteht. Erstrebenswert ist es, die Verteilvorrichtung mit einem möglichst geringen Druckunterschied zu betreiben. Durch die Abdichtung des Ausgangsbehälters und der Zielbehälter wird erreicht, dass die Verteilvorrichtung mit einem Druckunterschied zwischen dem Anfang des Förderrohrs und dem Ende des Förderrohrs von nicht mehr als 0,2 Bar, vorzugsweise nicht mehr als 0,1 Bar betrieben werden kann.

Der Querschnitt des Förderrohrs kann beliebige Form haben, beispielsweise quadratisch oder rechteckig sein. In einer bevorzugten Ausführungsform ist das Förderrohr im Querschnitt rund. Die Durchtrittsflächen sind so in der unteren Hälfte des Rohrs angeordnet, dass sie das Rohr im Querschnitt in zwei Segmente unterteilen. Durch das untere Segment wird das Fluidisiergas in das Förderrohr eingeleitet und unter den Durchtrittsflächen verteilt. Das Fluidisiergas kann großflächig durch die Durchtrittsöffnungen in das obere Segment des Förderrohrs eintreten und das Fördergut in diesem Segment fluidisieren. Das Fördergut wird durch das obere Segment entlang dem Förderrohr transportiert.

Die Durchtrittsflächen, die die beiden Segmente trennen, können eben ausgebildet sein, was die gleichmäßige Verteilung des Fluidisiergases fördert. Weiter sind die Durchtrittsflächen so ausgebildet, dass sie dem Fluidisiergas möglich wenig Widerstand entgegensetzen, dass aber das Fördergut gleichwohl nicht durch die Durchtrittsflächen hindurchfallen kann.

Da das Fluidisiergas sich bei der erfindungsgemäßen Verteilvorrichtung zusammen mit dem Fördergut durch das Förderrohr bewegt, kann der Durchmesser des Förderrohrs kleiner sein als bei bekannten Verteilvorrichtungen. Bei diesen ist nämlich stets davon ausgegangen worden, dass oberhalb des für das Fördergut erforderlichen Raums weiterer Raum vorhanden sein muss, durch den das Fluidisiergas abgeführt werden kann.

In einer vorteilhaften Ausführungsform ist die Treibgaszuführung so ausgelegt, dass der Treibgasstrom durch das Förderrohr eine Geschwindigkeit zwischen 0,7 m/s und 1,0 m/s hat. Die Angaben über den Treibgasstrom beziehen sich auf den Abschnitt des Förderrohrs, in dem das Treibgas noch nicht mit dem Fluidisiergas vermischt ist. Das Fördergut bewegt sich mit einer Geschwindigkeit durch das Förderrohr, die geringfügig kleiner ist als die Geschwindigkeit des Treibgasstroms. Bei dieser Treibgasgeschwindigkeit können in einem Förderrohr von 10 cm Durchmesser bis zu 12 t/h an Fördergut transportiert werden.

Der für das Fluidisieren des Förderguts erforderliche Fluidisiergasstrom wird in der Regel als spezifischer Fluidisiergasstrom bezogen auf die Durchtrittsfläche angegeben. Dieser Fluidisiergasstrom kann im Rahmen der Erfindung zwischen 0,8 m³/(m²·min) und 1,8 m³/(m²·min) vorzugsweise zwischen 1,3 m³/(m²·min) und 1,6 m³/(m²·min) liegen. Die dem Förderrohr zugeführte Treibgasmenge ist unabhängig davon, wie lang das Förderrohr ist. Die Fluidisiergasmenge hingegen wird größer, je länger das Förderrohr ist, da in einem längeren Förderrohr mehr Durchtrittsflächen erforderlich sind.

Die Erfindung wird nachfolgend anhand einer vorteilhaften Ausführungsform unter Bezugnahme auf die beigefügten Zeichnungen beispielhaft beschrieben. Es zeigen:
- Fig. 1:: eine schematische Darstellung einer erfindungsge- mäßen Verteilvorrichtung;
- Fig. 2:: einen Querschnitt durch Fig. 1 entlang der Linie A-A;
- Fig. 3:: einen vergrößerten Ausschnitt aus Fig.1.

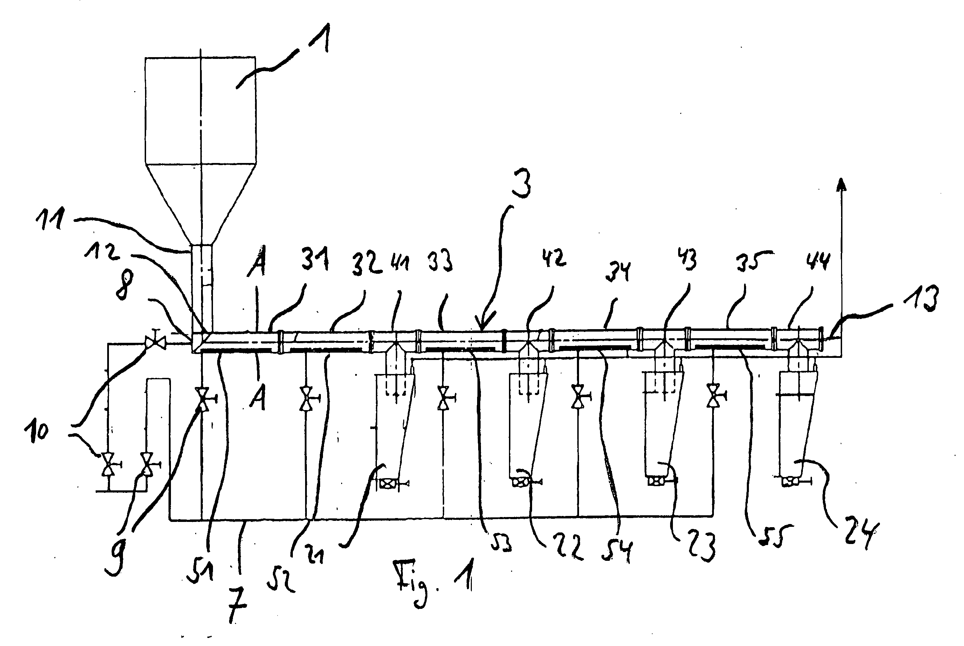

Eine erfindungsgemäße Verteilvorrichtung in Fig. 1 ist dazu ausgelegt, ein Fördergut aus einem Ausgangsbehälter 1 auf mehrere Zielbehälter 21, 22, 23, 24 zu verteilen. In dem Ausführungsbeispiel sind lediglich vier Zielbehälter 21, 22, 23, 24 gezeigt, in realen Verteilvorrichtungen können mehrere hundert Zielbehälter vorhanden sein. Die Verbindung zwischen dem Ausgangsbehälter 1 und den Zielbehältern 21, 22, 23, 24 stellt ein Förderrohr 3 her. Das Förderrohr 3 ist aus einer Mehrzahl von Rohrsegmenten 31, 32, 33, 34, 35 zusammengesetzt. Das Förderrohr 3 umfasst weiterhin in T-Stücken angeordnete Austrittsöffnungen 41, 42, 43, 44, wobei jede Austrittsöffnung 41, 42, 43, 44 oberhalb eines Zielbehälters 21, 22, 23, 24 angeordnet ist. Fördergut kann unter dem Einfluss der Schwerkraft aus dem Förderohr 3 durch die Austrittsöffnungen 41, 42, 43, 44 in die Zielbehälter 21, 22, 23, 24 fallen.

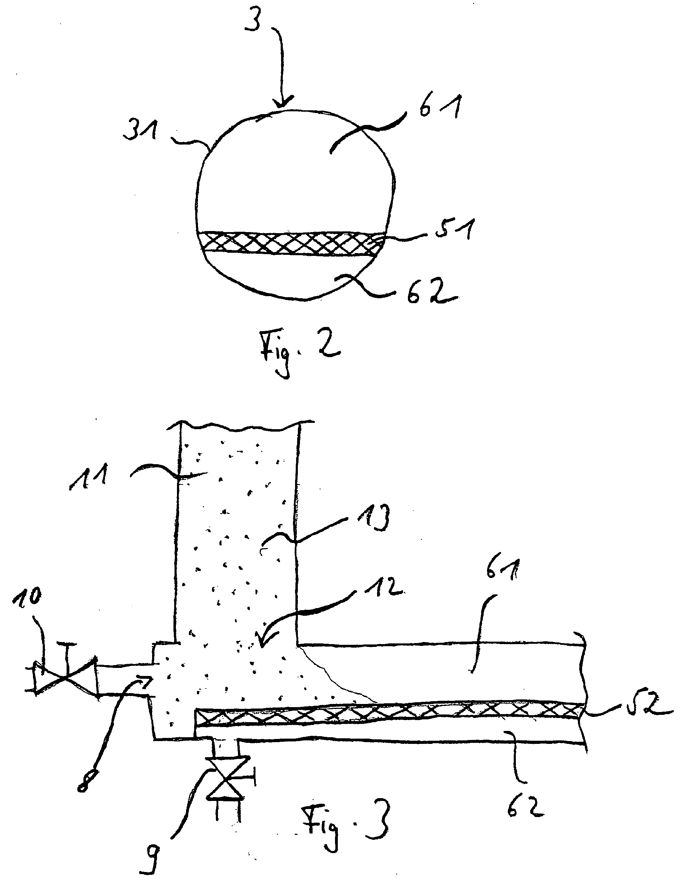

In der unteren Hälfte der Rohrsegmente 31, 32, 33, 34, 35 sind Durchtrittsflächen 51, 52, 53, 54, 55 angeordnet. Im Bereich der Austrittsöffnungen 41, 42, 43, 44 ist das Förderrohr 3 frei von Durchtrittsflächen 51, 52, 53, 54, 55. Wie die Fig. 2 am Beispiel der Durchtrittsfläche 51 zeigt, unterteilen die Durchtrittsflächen 51, 52, 53, 54, 55 das Rohr 3 in ein oberes Segment 61 und ein unteres Segment 62. Dem unteren Segment 62 wird durch eine Leitung 7 Fluidisiergas zugeführt. Das Fluidisiergas verteilt sich in dem Rohrsegment 62 unter der Durchtrittsfläche 51 und erzeugt einen Fluidisiergasstrom, der durch die Durchtrittsfläche 51 hindurch in das Rohrsegment 61 eintritt. In dem Rohrsegment 61 befindliches auf der Durchtrittsfläche 51 aufliegendes Fördergut wird durch den von unten einwirkenden Fluidisiergasstrom fluidisiert.

Am Anfang des Förderrohrs 3 ist eine Treibgaszuführung 8 angeordnet, durch die ein Treibgasstrom entlang der Förderrichtung des Förderrohrs 3 erzeugt wird. Durch den Treibgasstrom wird der Transport des fluidisierten Förderguts in Gang gesetzt und es wird der Fluidisiergasstrom umgelenkt, so dass das Fördergut durch einen kombinierten Gasstrom entlang dem Förderrohr 3 transportiert wird. Durch die Austrittsöffnungen 41, 42, 43, 44 fällt ein Teil des Förderguts in die Zielbehälter 21, 22, 23, 24, während ein Teil des Förderguts die Austrittsöffnungen 41, 42, 43, 44 passiert. Die am Anfang des Förderrohrs 3 angeordneten Zielbehälter füllen sich auf diese Weise schneller als die am Ende des Förderrohrs 3 angeordneten Zielbehälter. Wenn alle Zielbehälter 21, 22, 23, 24 gefüllt sind, kann das Fördern des Förderguts eingestellt werden, der Treibgasstrom und der Fluidisiergasstrom können also ausgeschaltet werden. Dem Ein- und Ausschalten des Fluidisiergasstroms und des Treibgasstroms dienen Ventile 9, 10.

Damit der Treibgasstrom bzw. der kombinierte Gasstrom einen Transport des Förderguts bewirken, müssen die Gasströme sich entlang dem Förderrohr 3 bewegen. Um zu Verhindern, dass die Gasströme in anderer Richtung aus dem Förderrohr 3 entweichen können, sind die Zielbehälter 21, 22, 23, 24 sind deswegen dicht mit den Austrittsöffnungen 41, 42, 43, 44 verbunden.

Der Ausgangsbehälter 1 ist über ein Verbindungsrohr 11 mit der Zutrittsöffnung 12 des Förderrohrs 3 verbunden. Das Verbindungsrohr 11 und die Zutrittsöffnung 12 sind frei durchgängig, so dass das Fördergut aus dem Ausgangsbehälter 1 unter dem Einfluss der Schwerkraft in das Förderrohr 3 fallen kann. Wenn die Verteilvorrichtung außer Betrieb ist, bildet sich, wie in Fig. 3 gezeigt, eine Ansammlung von nicht fluidisiertem Fördergut 13 im unter der Zutrittsöffnung 12 angeordneten Bereich des Förderrohrs 3. Durch Zuschalten des Fluidisiergasstroms wird der im Förderrohr 3 befindliche Teil des Förderguts fluidisiert. Das fluidisierte Fördergut wird durch den Treibgasstrom entlang dem Förderrohr 3 transportiert.

Die Fördergutsäule in dem Verbindungsrohr 11 dichtet das Förderrohr 3 in Richtung des Ausgangsbehälters 1 ab. Der Treibgasstrom und der Fluidisiergasstrom können nicht durch den Ausgangsbehälter 1 entweichen, sondern werden entlang dem Förderrohr 3 gezwungen. Am Ende des Förderrohrs 3 werden die kombinierten Gasströme aus Fluidisiergas und Treibgas durch eine Ablufteinrichtung 13 abgeführt.

Die Zielbehälter 21, 22, 23, 24 können ihrerseits Ausgangsbehälter für Zielbehälter einer nachgeordneten Ebene sein. Auf diese Weise können die Verteilvorrichtungen über mehrere hierarchisch gegliederte Ebenen kombiniert werden.

## Patentansprüche

1. Verteilvorrichtung zum Fördern eines fluidisierbaren Förderguts von einem Ausgangsbehälter (1) zu einer Mehrzahl von Zielbehältern (21, 22, 23, 24) mit einem Förderrohr (3), das eine Zutrittsöffnung (12) für das Fördergut und eine Mehrzahl von Austrittsöffnungen (41, 42, 43, 44) für das Fördergut aufweist, mit in dem Förderrohr (3) angeordneten Durchtrittsflächen (51, 52, 53, 54, 55) für einen von unten auf das Fördergut einwirkenden Fluidisiergasstrom, **dadurch gekennzeichnet, dass** eine Treibgaszuführung (8) zum Erzeugen eines Treibgasstroms entlang der Förderrichtung des Förderrohrs (3) vorgesehen ist, und dass die durch die Treibgaszuführung (8) zugeführte Treibgasmenge so bemessen ist, dass der Treibgasstrom durch das Förderrohr eine Geschwindigkeit zwischen 0,5 m/s und 1,5 m/s hat.

2. Verteilvorrichtung nach Anspruch 1, **dadurch gekennzeichnet, dass** die Austrittsöffnungen (41, 42, 43, 44) am Boden des Förderrohrs (3) angeordnet sind.

3. Verteilvorrichtung nach Anspruch 1 oder 2, **dadurch gekennzeichnet, dass** die Querschnittsfläche zumindest einer Austrittsöffnung (41, 42, 43, 44) um nicht mehr als 20%, vorzugsweise um nicht mehr als 10%, weiter vorzugsweise um nicht mehr als 5% kleiner ist als der die Querschnittsfläche des Förderrohrs (3).

4. Verteilvorrichtung nach einem der Ansprüche 1 bis 3, **dadurch gekennzeichnet, dass** das Förderrohr (3) einen Abschnitt aufweist, der in Förderrichtung ansteigt.

5. Verteilvorrichtung nach einem der Ansprüche 1 bis 4, **dadurch gekennzeichnet, dass** sie Zielbehälter (21, 22, 23, 24) umfasst und dass ein zweiter Zielbehälter in Förderrichtung des Förderrohrs (3) hinter einem ersten Zielbehälter angeordnet ist und dass der zweite Zielbehälter höher angeordnet ist als der erste Zielbehälter.

6. Verteilvorrichtung nach einem der Ansprüche 1 bis 5, **dadurch gekennzeichnet, dass** die Zielbehälter (21, 22, 23, 24) dicht mit dem Förderrohr (3) verbunden sind.

7. Verteilvorrichtung nach einem der Ansprüche 1 bis 6, **dadurch gekennzeichnet, dass** sie einen Ausgangsbehälter (1) umfasst und dass der Ausgangsbehälter (1) oberhalb der Zutrittsöffnung (12) angeordnet ist.

8. Verteilvorrichtung nach Anspruch 7, **dadurch gekennzeichnet, dass** die Zutrittsöffnung (12) für Fördergut aus dem Ausgangsbehälter (1) frei durchgängig ist.

9. Verteilvorrichtung nach Anspruch 8, **dadurch gekennzeichnet, dass** vor der Zutrittsöffnung (12) Fördergut derart angeordnet ist, dass die Zutrittsöffnung (12) abgedichtet ist.

10. Verteilvorrichtung nach Anspruch 9, **dadurch gekennzeichnet, dass** zwischen dem Ausgangsbehälter (1) und der Zutrittsöffnung (12) ein Verbindungsrohr (11) angeordnet ist.

11. Verteilvorrichtung nach Anspruch 10, **dadurch gekennzeichnet, dass** Verbindungsrohr (11) eine Länge zwischen 0,8 m und 3 m, vorzugsweise zwischen 1,3 m und 2 m hat.

12. Verteilvorrichtung nach einem der Ansprüche 1 bis 11, **dadurch gekennzeichnet, dass** die Durchtrittsflächen (51, 52, 53, 54, 55) eben sind.

13. Verteilvorrichtung nach einem der Ansprüche 1 bis 12, **dadurch gekennzeichnet, dass** die durch die Treibgaszuführung (8) zugeführte Treibgasmenge so bemessen ist, dass der Treibgasstrom durch das Förderrohr eine Geschwindigkeit zwischen 0,7 m/s und 1,0 m/s hat.

14. Verteilvorrichtung nach einem der Ansprüche 1 bis 13, **dadurch gekennzeichnet, dass** der auf die Durchtrittsfläche bezogene spezifische Fluidisiergasstrom zwischen 0,8 m³/(m²·min) und 1,8 m³/(m²·min), vorzugsweise zwischen 1,3 m³/(m²·min) und 1,6 m³/(m²·min) liegt.

## Claims

1. Distributing device for distributing a fluidizable conveyed material from a starting container (1) to a plurality of destination containers (21, 22, 23, 24), comprising a conveying pipe (3) having an intake opening (12) for the conveyed material and a plurality of discharge openings (41, 42, 43, 44) for the conveyed material, and comprising pass-through surfaces (51, 52, 53, 54, 55), arranged in the conveying pipe (3), for a fluidizing gas stream which acts on the conveyed material from below, **characterized in that** a propellant gas feed (8) is provided, for generating a propellant gas stream along the direction of conveyance of the conveying pipe (3), and **in that** the propellant gas quantity supplied by the propellant gas feed (8) is dimensioned such that the propellant gas stream through the conveying pipe has a velocity between 0.5 m/s and 1.5 m/s.

2. Distributing device according to Claim 1, **characterized in that** the discharge openings (41, 42, 43, 44) are arranged on the floor of the conveying pipe (3).

3. Distributing device according to Claim 1 or 2, **characterized in that** the cross-sectional area of at least one discharge opening (41, 42, 43, 44) is no more than 20%, preferably no more than 10%, further preferably no more than 5% smaller than the cross-sectional area of the conveying pipe (3).

4. Distributing device according to one of Claims 1 to 3, **characterized in that** the conveying pipe (3) has a portion which rises in the direction of conveyance.

5. Distributing device according to one of Claims 1 to 4, **characterized in that** it comprises destination containers (21, 22, 23, 24), and **in that** a second destination container is arranged behind a first destination container in the direction of conveyance of the conveying pipe (3), and **in that** the second destination container is arranged higher than the first destination container.

6. Distributing device according to one of Claims 1 to 5, **characterized in that** the destination containers (21, 22, 23, 24) are sealingly connected to the conveying pipe (3).

7. Distributing device according to one of Claims 1 to 6, **characterized in that** it comprises a starting container (1), and **in that** the starting container (1) is arranged above the intake opening (12).

8. Distributing device according to Claim 7, **characterized in that** the intake opening (12) is freely traversable for conveyed material from the starting container (1).

9. Distributing device according to Claim 8, **characterized in that** in front of the intake opening (12) conveyed material is arranged in such a way that the intake opening (12) is sealed off.

10. Distributing device according to Claim 9, **characterized in that** a connecting pipe (11) is arranged between the starting container (1) and the intake opening (12).

11. Distributing device according to Claim 10, **characterized in that** the connecting pipe (11) has a length between 0.8 m and 3 m, preferably between 1.3 m and 2 m.

12. Distributing device according to one of Claims 1 to 11, **characterized in that** the pass-through surfaces (51, 52, 53, 54, 55) are flat.

13. Distributing device according to one of Claims 1 to 12, **characterized in that** the propellant gas quantity supplied by the propellant gas feed (8) is dimensioned such that the propellant gas stream through the conveying pipe has a velocity between 0.7 m/s and 1.0 m/s.

14. Distributing device according to one of Claims 1 to 13, **characterized in that** the specific fluidizing gas stream related to the pass-through surface ranges between 0.8 m³/(m²·min) and 1.8 m³/(m²·min), preferably between 1.3 m³/(m²·min) and 1.6 m³/(m²·min).

## Revendications

1. Dispositif répartiteur pour le transport d'un produit à transporter fluidifiable d'un contenant de départ (1) à une pluralité de contenants cible (21, 22, 23, 24) comprenant un tuyau transporteur (3), qui présente une ouverture d'accès (12) pour le produit à transporter et une pluralité d'ouvertures de sortie (41, 42, 43, 44) pour le produit à transporter, des surfaces de passage (51, 52, 53, 54, 55) disposées dans le tuyau transporteur (3) pour un flux de gaz de fluidification agissant par en bas sur le produit à transporter, **caractérisé en ce qu'**une arrivée de gaz propulseur (8) est prévue pour générer un flux de gaz propulseur le long du sens de transport du tuyau transporteur (3), et **en ce que** la quantité de gaz propulseur amenée par l'arrivée de gaz propulseur (8) est conçue de telle sorte que le flux de gaz propulseur traversant le tuyau transporteur a une vitesse comprise entre 0,5 m/s et 1,5 m/s.

2. Dispositif répartiteur selon la revendication 1, **caractérisé en ce que** les ouvertures de sortie (41, 42, 43, 44) sont disposées sur le fond du tuyau transporteur (3).

3. Dispositif répartiteur selon la revendication 1 ou 2, **caractérisé en ce que** la surface de section d'au moins une ouverture de sortie (41, 42, 43, 44) n'est pas inférieure de plus de 20 %, de préférence de plus de 10 %, avec une autre préférence de plus de 5 % à la surface de section du tuyau transporteur (3).

4. Dispositif répartiteur selon l'une quelconque des revendications 1 à 3, **caractérisé en ce que** le tuyau transporteur (3) présente un tronçon qui grimpe dans le sens de transport.

5. Dispositif répartiteur selon l'une quelconque des revendications 1 à 4, **caractérisé en ce qu'**il comprend des contenants cible (21, 22, 23, 24) et **en ce qu'**un second contenant cible est disposé dans le sens de transport du tuyau transporteur (3) en aval d'un premier contenant cible et **en ce que** le second contenant cible est disposé plus haut que le premier contenant cible.

6. Dispositif répartiteur selon l'une quelconque des revendications 1 à 5, **caractérisé en ce que** les contenants cible (21, 22, 23, 24) sont reliés de façon étanche au tuyau transporteur (3).

7. Dispositif répartiteur selon l'une quelconque des revendications 1 à 6, **caractérisé en ce qu'**il comprend un contenant de départ (1) et **en ce que** le contenant de départ (1) est disposé au-dessus de l'ouverture d'accès (12).

8. Dispositif répartiteur selon la revendication 7, **caractérisé en ce que** l'ouverture d'accès (12) est librement accessible pour du produit à transporter provenant du contenant de départ (1).

9. Dispositif répartiteur selon la revendication 8, **caractérisé en ce que** du produit à transporter est disposé en amont de l'ouverture d'accès (12), de telle sorte que l'ouverture d'accès (12) est rendue étanche.

10. Dispositif répartiteur selon la revendication 9, **caractérisé en ce qu'**un tuyau de liaison (11) est disposé entre le contenant de départ (1) et l'ouverture d'accès (12).

11. Dispositif répartiteur selon la revendication 10, **caractérisé en ce que** le tuyau de liaison (11) a une longueur comprise entre 0,8 m et 3 m, de préférence entre 1,3 m et 2 m.

12. Dispositif répartiteur selon l'une quelconque des revendications 1 à 11, **caractérisé en ce que** les surfaces de passage (51, 52, 53, 54, 55) sont planes.

13. Dispositif répartiteur selon l'une quelconque des revendications 1 à 12, **caractérisé en ce que** la quantité de gaz propulseur amenée par l'arrivée de gaz propulseur (8) est conçue de telle sorte que le flux de gaz propulseur traversant le tuyau transporteur a une vitesse comprise entre 0,7 m/s et 1,0 m/s.

14. Dispositif répartiteur selon l'une quelconque des revendications 1 à 13, **caractérisé en ce que** le flux de gaz de fluidification spécifique rapporté à la surface de passage se situe entre 0,8 m³/(m²·min) et 1,8 m³/(m²·min), de préférence entre 1,3 m³/(m²·min) et 1,6 m³/(m²·min).
